Europäisches Patentamt

European Patent Office

Office européen des brevets

(11) Publication number: **0 042 907**
**B1**

# (12) EUROPEAN PATENT SPECIFICATION

(45) Date of publication of patent specification: **13.08.86**

(51) Int. Cl.⁴: **G 02 B 6/24, G 02 F 1/00**

(21) Application number: **81101638.5**

(22) Date of filing: **06.03.81**

(54) Optical switch.

(30) Priority: **30.06.80 US 164389**

(43) Date of publication of application:
**06.01.82 Bulletin 82/01**

(45) Publication of the grant of the patent:
**13.08.86 Bulletin 86/33**

(84) Designated Contracting States:
**DE FR GB IT**

(56) References cited:
**FR-A-2 244 187**
**GB-A-2 030 319**
**US-A-4 121 884**

(73) Proprietor: **International Business Machines Corporation**
**Old Orchard Road**
**Armonk, N.Y. 10504 (US)**

(72) Inventor: **Brady, Michael John**
**25 West Ridge Road Starr Ridge Manor**
**Brewster New York 10509 (US)**
Inventor: **Gregor, Lawrence Vincent**
**Country Club Road**
**Hopewell Junction New York 12533 (US)**
Inventor: **Johnson, Mark**
**Illington Road**
**Ossining New York 10562 (US)**

(74) Representative: **Ahlmàn, Bertel et al**
**IBM Svenska AB Box 962**
**S-18 109 Lidingö (SE)**

Courier Press, Leamington Spa, England.

## Description

This invention relates to optical switches.

Because a light beam can easily be generated and modulated so as to carry much more information than is possible with an electrical signal, light beams have a distinct advantage in communicating information between two or more locations. High quality low loss optical fibres are now readily available, so that optical fibres are now being used widely to define optical paths for such light beams. Optical switches are needed to control routing of optical beams along alternative optical paths.

Most optical switches have one or more mechanical actuation elements which move. Due to the small size of optical fibres, such designs are inherently difficult to fabricate and furthermore are subject to wear and other mechanical problems. In US 4,035,637, a mechanical element of an optical switch is moved by fluid pressure, but the design contains mechanical moving parts and is rather complicated and not readily reduced to size for use with optical fibres.

US 4,082,435 describes an optical switch having a mechanical sliding element which is physically moved by magnetic fields. This switch is also difficult to fabricate in a size suitable for use with individual optical fibres and it has mechanical disadvantages such as frictional wear and dirt accumulation.

US 4,121,884 describes an optical switch where a fluid is controllably moved into the optical path. This switch does not have moving mechanical parts but it requires construction of a parallel sided cell within an optical fibre and at an angle to the fibre axis. Such a structure is not easily constructed.

Ferrofluids are colloidal dispersions of sub-domain magnetic particles in a liquid carrier which retain liquid characteristics in the presence of a magnetic field. Ferrofluids of various types and in various carriers are commercially available from Ferrofluidics Corp. of Burlington, Mass, United States of America. They are described in detail, for example, in a brochure distributed by Ferrofluidics Corp. entitled "Magnetic Fluid — An Introduction to the Phenomena and Applications of Magnetic Fluid Technology". Ferrofluids have been used mainly as seals but use is also known in pumping, energy conversion, viscous damping, lubrication, accelerometers, levitation bearings, specific gravity meters, and medical treatments, for example. Ferrofluids and their uses are described in detail by R. Kaiser et al., in "Some Applications of Ferrofluid Magnetic Colloids", IEEE Trans. on Magnetics, Vol. MAG—6, No. 3, at pages 694—698 (Sept. 1970) and by K. Raj et al., in "Magnetic Fluid Seals", Laser Focus, April 1979, at pages 56—61.

US 3,906,415 describes the use of ferrofluid to move mercury pellets around in electrical switching apparatus. US 3,381,248 describes the use of a magnetic field to break an electrical circuit. The magnetic field induces current flow in an electrically conductive liquid which interacts with the applied magnetic field and causes movement of the liquid away from an electrical switch contact. Both of these references are dealing with the problem of quickly switching large electrical currents and voltages without arcing damage to the switch. Such problems of arcing do not occur in optical switches.

FR2244187 describes an optical switch where an opaque ferrofluid droplet in an enclosure is magnetically moved into or out of a light path to selectively switch the light path. The use of a plural light path switch is also disclosed.

This invention seeks to provide an optical switch which is simple and inexpensive to fabricate and which switches a light path rapidly and without frictional wear to the switch.

The present invention is characterized by the features defined in claim 1.

The invention will now be described with reference to the accompanying drawings in which:

Figure 1 is a sectional view of a single pole double throw optical switch in accordance with this invention on the line VI—VI of Fig. 2; and

Figure 2 is a sectional view of the optical switch on the line VII—VII of Fig. 1.

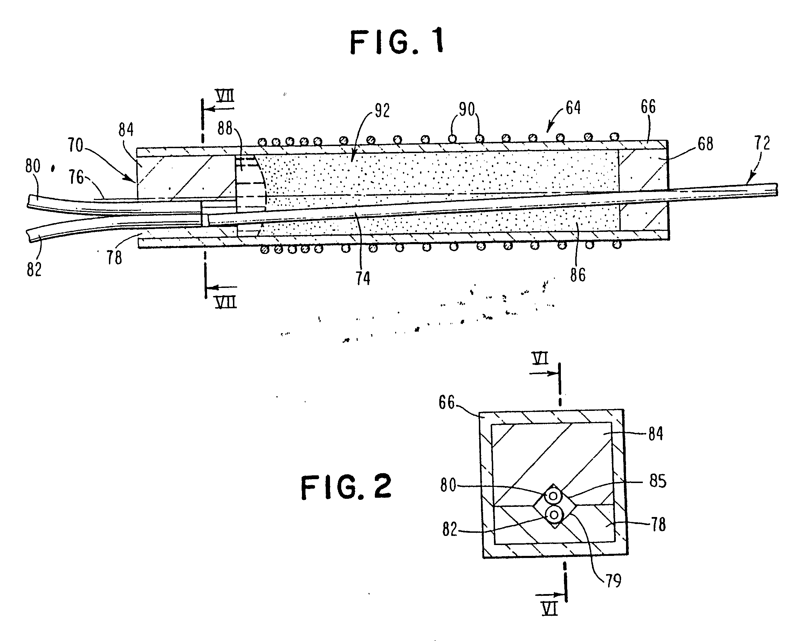

In an embodiment according to the present invention (Figs. 1 and 2), an optical switch includes an enclosure 64 comprising a square cross-section tube 66 having plug elements 68 and 70 sealing the ends thereof.

Plug 70 is in two parts 78 and 84, in which two optical fibres 80 and 82 are sealed and supported. The ends of the fibres 80 and 82 are located in the middle of the plug 70 and are longitudinally aligned with alignment recesses 79 and 85, respectively, in the plug parts 78 and 84. The ends of the fibres 80 and 82 are laterally aligned one above the other.

An optical fibre 72 passes through the plug 68 in which it is sealed. The end 74 of the fibre 72 within the enclosure 64 is supported in cantilever fashion and is so oriented as to be inclined away from the axis 76 of the enclosure 64 and to rest with mechanical bias against the alignment recess 79 in the plug part 78.

As the fibre 82 rests in the same alignment recess 79, the fibre 72 in this position is in axial alignment therewith. The ends of fibres 72 and 82 are closely adjacent to each other, so that light from either fibre couples efficiently into the other.

If the cantilevered end 74 of fibre 72 is flexed upward, it engages in alignment recess 85 in axial alignment with fibre 80, instead of with fibre 82. The plug parts 78 and 84 may be silicon blocks, for example, in which vee-grooves have been etched, the space around fibres 80 and 82 being filled with sealant.

Enclosure 64 is nearly filled with ferrofluid 86. A small space around the ends of the fibres and adjacent plug 70 contains transparent index matching fluid 88 which is immiscible with the ferrofluid. Coil 90 surrounds enclosure 64 in the region which contains the ferrofluid.

Ordinarily, fibre end 74 rests in the position shown. When coil 90 is energized, the magnetic field intensity close to the coil wires is greater than the magnetic field intensity along the axis 76. Because ferrofluid is a colloidal suspension of magnetic particles, this field gradient results in a redistribution of the magnetic particles. The concentration of particles rises near the circumference 92 and drops along the axis 76.

Because the magnetic particles are more dense than the carrier fluid of the ferrofluid, the redistribution of particles results in local changes in the density of the ferrofluid. The density of the ferrofluid becomes less at the axis 76. Buoyancy (or displacement) forces thus act upon the cantilevered end 74 of fibre 72 and tend to push it towards the axis 76, thus flexing the end 74 to seat in the alignment recess 85. When coil 90 is energized, the end 74 of fibre 72 moves from a position in alignment with the end of fibre 82 into a position in alignment with the end of fibre 80. When coil 90 is de-energized, the fluid forces are removed from the end 74 and the natural resilience of the fibre 72 restores the end 74 from the elastically deformed flexed position to the rest position, thus moving the end 74 back to a position in alignment with the end of fibre 82.

Thus the ferrofluid 86 is capable of assuming two different configurations, in one of which the two light fibres 72 and 82 are coupled and in the other of which the two light paths 72 and 82 are not coupled.

In a practical device, some small bias current may be retained in coil 90, even in the de-energized state, so that the ferrofluid always remains in the position shown and does not tend to flow towards the fibre end faces. A small bias field would not affect the rest position of the end 74 so long as it does not result in bias forces on the end 74 sufficient to overcome the mechanical bias of the fibre against the alignment recess 79. Preferably, coil 90 has a greater turns density in the region close to the interface of the ferrofluid with the index matching fluid, because forces applied to the fibre end 74 in this region are more effective than those applied closer to plug 68.

### Claims

1. An optical switch comprising a first (72) and a second (82) light path, ferrofluid means (86) capable of assuming two different configurations, said first and second light paths being coupled together when the ferrofluid means is in a first configuration, controllable magnetic field means (90) for causing the ferrofluid means to assume a selected one of the two configurations, and a third light path (80), the first light path (72) being coupled to the third light path when the ferrofluid means (86) is in the second configuration, characterised in that the first path (72) comprises a movable member (74) passing through the ferrofluid, that in the second configuration of the ferrofluid the density distribution of the ferrofluid (86) changes thereby changing the buoyancy force of the ferrofluid upon the movable member (74) thus causing movement of a free end of the movable member (74) so that it opposes the third (80) light path.

2. A switch according to claim 1, in which the movable member (74) is a cantilevered optical fibre.

3. A switch according to claim 2, in which the cantilevered optical fibre (74) tends to be brought away from the position opposite the third light path (80) by elastic deformation forces of the cantilevered fibre.

4. A switch according to any preceding claim, in which each light path comprises an optical fibre.

5. A switch according to claim 4, in which at least one of the light paths further comprises a focusing element for directing light from the one path to another one of the light paths.

### Patentansprüche

1. Optischer Schalter mit einem ersten (72) und einem zweiten (82) Lichtweg, Ferrofluidmitteln (86), welche zwei verschiedene Konfigurationen annehmen können, wobei der erste und der zweite Lichtweg miteinander gekoppelt sind, wenn die Ferrofluidmittel in einer ersten Konfiguration sind, steuerbaren Magnetfeldmitteln (90) zur Bewirkung, daß die Ferrofluidmittel eine ausgewählte der beiden Konfigurationen annehmen, und einem dritten Lichtweg (80), wobei der erste Lichtweg (72) mit dem dritten Lichtweg gekoppelt ist, wenn die Ferrofluidmittel (86) in der zweiten Konfiguration sind, dadurch gekennzeichnet, daß der erste Weg (72) ein durch das Ferrofluid verlaufendes bewegliches Element (74) umfaßt, daß in der zweiten Konfiguration des Ferrofluids sich die Dichteverteilung des Ferrofluids (86) ändert, wodurch sie die Auftriebskraft des Ferrofluids auf das Ferrofluids auf das bewegliche element (74) ändert und damit eine Bewegung des freien Endes des beweglichen Elements (74) bewirkt, so daß es demdritten (80) Lichtweg gegenüberliegt.

2. Schalter nach Anspruch 1, bei welchem das bewegliche Element (74) eine einseitig eingespannte Lichtleitfaser ist.

3. Schalter nach Anspruch 2, bei welchem die einseitig eingespannte Lichtleitfaser (74) aus der dem dritten Lichtweg (80) gegenüberliegenden Stellung durch elastische Verformungskräfte der einseitig eingespannten Faser weggebracht zu werden trachtet.

4. Schalter nach irgendeinem vorstehenden Anspruch, bei welchem jeder Lichteg eine Lichtleitfaser umfaßt.

5. Schalter nach Anspruch 4, bei welchem wenigstens einer der Lichtwege ferner ein Fokussierelement zum Richten von Licht aus dem einen Lichtweg auf einen anderen der Lichtwege umfaßt.

### Revendications

1. Commutateur optique comprenant un premier (72) et un second (82) trajets lumineux, un ferrofluide (86) capable de prendre deux configurations différentes, lesdits premier et second trajets lumineux étant accouplés l'un avec l'autre lorsque le ferrofluide est dans une première configuration, un dispositif commandable (90) de production de champ magnétique pour forcer le ferrofluide à prendre une configuration sélectionnée parmi lesdites deux configurations, et un troisième trajet lumineux (80), le premier trajet lumineux (72) étant accouplé au troisième trajet lumineux lorsque le ferrofluide (86) est dans la seconde configuration, ledit commutateur optique étant caractérisé en ce que le premier trajet (72) comprend un élément mobile (74) qui traverse le ferrofluide, en ce que, dans la seconde configuration du ferrofluide, la répartition de la densité du ferrofluide (86) change, modifiant ainsi la force de poussée ascentionnelle exercée par le ferrofluide sur l'élément mobile (74) et provoquant ainsi le déplacement d'une extrémité libre de l'élément mobile (74) de sorte qu'elle se trouve face au troisième trajet lumineux (80).

2. Commutateur selon la revendication 1, dans lequel l'élément mobile (74) est une fibre optique en porte-à-faux.

3. Commutateur selon la revendication 2, dans lequel la fibre optique en porte-à-faux (74) tend à être écartée de la position où elle est face au troisième trajet lumineux (80) par des forces de déformation élastique de la fibre en porte-à-faux.

4. Commutateur selon l'une quelconque des revedications précédentes, dans lequel chaque trajet lumineux est constitué par une fibre optique.

5. Commutateur selon la revendication 4, dans lequel au moins un des trajets lumineux comprend également un élément de localisation pour diriger la lumière provenant d'un trajet vers un autre des trajets lumineux.

# FIG. 1

# FIG. 2

0 042 907